# EUROPÄISCHE PATENTSCHRIFT

(11) **EP 1 118 230 B1**
(45) Veröffentlichungstag und Bekanntmachung des Hinweises auf die Patenterteilung: **17.01.2007**
(21) Anmeldenummer: 99969883.0
(22) Anmeldetag: 29.09.1999
(51) Int. Cl.: H04Q 3/66, H04Q 3/62

(54) **VERFAHREN ZUR VERMITTLUNG VON TELEFONGESPRÄCHEN ZWISCHEN ZWEI TELEFONNETZEN UNTER VERWENDUNG EINER ZENTRALEN STEUERUNG**
METHOD FOR ESTABLISHING A TELEPHONE CONNECTION BETWEEN TWO TELEPHONE NETS USING A CENTRAL CONTROL UNIT
PROCEDE DE COMMUTATION DE CONVERSATIONS TELEPHONIQUES ENTRE DEUX RESEAUX TELEPHONIQUES AU MOYEN D'UN ORGANE DE COMMANDE CENTRAL

(30) Priorität: 30.09.1998 DE 19845036
(43) Veröffentlichungstag der Anmeldung: 25.07.2001
(73) Patentinhaber: SIEMENS AKTIENGESELLSCHAFT, 80333 München (DE)
(72) Erfinder: STEINBACH, Holger, D-33106 Paderborn (DE)
(86) Internationale Anmeldenummer: PCT/DE1999/003137
(87) Internationale Veröffentlichungsnummer: WO 2000/019740

(56) Entgegenhaltungen:
- WO-A-94/13109
- WO-A-96/33583
- WO-A-97/39592
- WO-A-98/08335

## Beschreibung

Die Erfindung betrifft ein Verfahren zum Vermitteln von Telefongesprächen von einem Endgerät eines ersten Telefonnetzes zu einem Endgerät in einem zweiten Telefonnetz.

Nebenstellenanlagen an verschiedenen Standorten eines Unternehmens werden häufig über Festverbindungen miteinander zu einem Privatnetz verbunden, das ein erstes Telefonnetz bildet. Dies ermöglicht es den Teilnehmern innerhalb des Privatnetzes miteinander z.B. Telefongespräche zu führen, ohne daß für ein einzelnes Gespräch Gebühren an einen Betreiber eines zweiten, vorzugsweise öffentlichen Telefonnetzes zu entrichten sind.

Mit Privatnetzen lassen sich die Kosten für Amtsgespräche, d.h. Telefonverbindungen von Endgeräten des Privatnetzes zu Endgeräten in einem öffentlichen Telefonnetz, senken. Ein Leistungsmerkmal von Privatnetzen, die Kosten für Amtsgespräche zu senken, wird auch als "Wegewahl zu minimalen Kosten" bzw. "Least Cost Routing", kurz LCR, bezeichnet. Dabei werden Verbindungen zu Endgeräten im öffentlichen Telefonnetz zu einem großen Teil über das Privatnetz übertragen. Der Ausstieg in das öffentliche Telefonnetz erfolgt dabei erst in unmittelbarer Nähe zu einem Ortsnetz, an das ein gerufenes Endgerät angeschlossen ist. Eine weitere Möglichkeit Kosten für Amtsgespräche zu senken ist die Wahl eines Netzanbieters, der günstige Tarife für eine Gesprächsvermittlung anbietet.

In der internationalen Offenlegungsschrift WO 98/08335 A wird eine separate Verbindungssteuerungseinheit zum Anschluß von Fernsprechendgeräten offenbart, bei dem ein Verbindungsweg zu einem gewählten Teilnehmer sowie ein geeigneter Netzbetreiber anhand von kostenoptimierenden Verbindungsdaten gewählt wird, die von einem ebenfalls offenbarten Datenserver auf Basis von geographischen, statistischen und tariflichen Daten berechnet und an eine Datenbank der Verbindungssteuerungseinheit übermittelt werden.

In der internationalen Offenlegungsschrift WO 96/33583 A wird ein Least Cost Router offenbart, der an den Ausgängen einer Nebenstellenanlage eines privaten Kommunikationsnetzes angeschaltet wird und der im Falle eines Verbindungswunsches innerhalb des privaten Kommunikationsnetzes eine Rückleitung auf einen speziellen Eingang der Nebenstellenanlage vornimmt.

In der internationalen Offenlegungsschrift WO 97/39592 A wird ein Kommunikationssystem mit einer Vielzahl von angeschlossenen Nebenstellenanlagen offenbart, die jeweils Speichereinrichtungen zur Aufnahme von Verbindungsdaten sowie Ausführungseinheiten enthalten, um einen optimalen Verbindungsweg über Nebenstellenanlagen des privaten Kommunikationssystems und/oder Vermittlungsstellen öffentlicher Kommunikationssysteme herzustellen.

In der internationalen Offenlegungsschrift WO 94/13109 A wird ein Kommunikationssystem mit einer Vielzahl von Durchschalteinrichtungen offenbart, wobei das Kommunikationssystem je nach gewählter Rufnummer eines daran angeschlossenen Endgeräts einen unterschiedlichen Verbindungspfad wählt. Die Durchschalteinrichtungen sind jeweils in verschiedenen Tarifzonen angeordnet, sodass eine Verbindung nach Höhe der Gebühren eines Netzbetreibers ausgewählt werden kann.

Das Leistungsmerkmal LCR wird von Privatnetzen angeboten, in denen alle Nebenstellenanlagen dieses Leistungsmerkmal unterstützen. Das bedeutet, daß die Erweiterung eines Privatnetzes um das Leistungsmerkmal LCR beim Stand der Technik entweder den Einsatz von zusätzlichen Hardwareeinrichtungen, umfangreiche Änderungen von Programmen in jeder Nebenstellenanlage des Privatnetzes erfordert oder das Austauschen aller Nebenstellenanlagen, die dieses Leistungsmerkmal nicht unterstützen, durch Nebenstellenanlagen mit diesem Leistungsmerkmal. Die bekannten Lösungen sind jedoch sehr aufwendig und daher mit großen Kosten verbunden.

Aufgabe der Erfindung ist es, ein Verfahren zur Vermittlung von Telefongesprächen zwischen verschiedenen Telefonnetzen unter Nutzung des LCR-Verfahrens mit geringem Aufwand zur Verfügung zu stellen.

Die Erfindung löst die Aufgabe durch die im Patentanspruch 1 angegebenen Merkmale. Vorteilhafte Weiterbildungen sind in den Unteransprüchen angegeben.

Die Erfindung folgt der Überlegung, daß sich in einem ersten Telefonnetz, das mehrere Nebenstellenanlagen enthält, das Leistungsmerkmal Least-Cost-Routing (LCR) realisieren läßt, indem alle Verbindungswünsche von Endgeräten des ersten Telefonnetzes zu Endgeräten in einem zweiten Telefonnetz zunächst an eine zentrale Steuerung geleitet werden. Sobald von einem rufenden Endgerät im ersten Telefonnetz die Rufnummer eines gerufenen Endgerätes im zweiten Telefonnetz gewählt wird, wird eine Telefonverbindung zur zentralen Steuerung aufgebaut. Anschließend wird die Rufnummer zur zentralen Steuerung übermittelt. Die zentrale Steuerung ermittelt anhand der Ortsnetzkennzahl der gewählten Rufnummer eine Nebenstellenanlage, von der aus der Übergang zum zweiten Telefonnetz erfolgt. Anschließend wird eine Telefonverbindung zur ermittelten Nebenstellenanlage hergestellt.

Die zentrale Steuerung verfügt über ein Verzeichnis, z.B. in Form einer Datei, das Kriterien enthält, die bei der Festlegung der Nebenstellenanlage, von der aus das erste Telefonnetz verlassen wird, berücksichtigt werden. Anhand der Ortsnetzkennzahl wird, wie bereits erläutert eine Nebenstellenanlage in unmittelbarer Nähe zum Zielort ermittelt. Ein weiteres Kriterium kann der Zeitpunkt des Verbindungswunsches sein, falls von verschiedenen Netzanbietern für bestimmte Tageszeiten oder Wochentage besonders günstige Tarife angeboten werden.

Neue oder geänderte Tarife von Netzanbietern können bei dem erfindungsgemäßen Verfahren besonders einfach berücksichtigt werden, weil bei Tarifänderungen nur das Verzeichnis der zentralen Steuerung angepaßt wird. In Telefonnetzen, in denen das Leistungsmerkmal LCR von allen Nebenstellenanlagen unterstützt wird, erfordern Tarifänderungen dagegen Anpassungen in allen Nebenstellenanlagen.

Durch die Erfindung wird erreicht, daß das Leistungsmerkmal LCR in Telefonnetzen angeboten werden kann, in denen das Leistungsmerkmal LCR nur von der zentralen Steuerung unterstützt wird. Nebenstellenanlagen des Telefonnetzen, die dieses Leistungsmerkmal nicht unterstützen, werden so angepaßt, daß sie Verbindungswünsche zu Teilnehmern in einem zweiten Telefonnetz nicht direkt an das zweite Telefonnetz sondern an die zentrale Steuerung weiterleiten. Diese Anpassung läßt sich bei geringen Aufwand in den Nebenstellenanlagen vornehmen. Insbesondere in Telefonnetzen mit Nebenstellenanlagen älterer Bauart wird durch das erfindungsgemäße Verfahren vermieden, daß die Nebenstellenanlagen älterer Bauart durch neue Nebenstellenanlagen ersetzt werden.

Bei dem ersten Telefonnetz kann es sich z.B. um ein Privatnetz eines Unternehmens handeln. Wie eingangs erläutert befinden sich die Nebenstellenanlagen typischerweise an verschiedenen Standorten des Unternehmens und sind über Standleitungen miteinander verbunden. Das zweite Telefonnetz kann z.B. ein öffentliches Telefonnetz sein, das von einem Netzbetreiber betrieben wird.

In einer bevorzugten Ausführungsform wird jede Nebenstellenanlage so konfiguriert, daß sie unmittelbar nach Wahl einer Amtskennziffer eine Verbindung zur zentralen Steuerung aufbaut. Die übrigen Ziffern der Rufnummer werden an die zentrale Steuerung übertragen, nachdem sie vom Teilnehmer gewählt wurden. Die zentrale Steuerung beginnt mit der Auswertung der Ziffernfolge der Rufnummer sobald die letzte Ziffer gewählt und übertragen worden ist. Die Zeit, die ein Teilnehmer für das Wählen der gesamten Ziffernfolge braucht, ist wesentlich größer als die Zeit, die für das Herstellen der Verbindung zur zentralen Steuerung und das Auswerten der Ziffernfolge benötigt wird. Der Aufbau der Verbindung zum gerufenen Endgerät wird somit nur geringfügig verzögert.

Das Verfahren eignet sich auch für Privatnetze, in denen den Nebenstellenanlagen Kennziffern zugeordnet sind. Diese Kennzahlen werden z.B. in Verbindung mit Rufnummernverzeichnissen bei der Weiterleitung von Telefonverbindungen innerhalb des Privatnetzes benutzt. Jede Nebenstellenanlage verfügt über ein Rufnummernverzeichnis, das einer Kennzahl eine Querleitung zuordnet, die die Nebenstellenanlage mit einer benachbarten Nebenstellenanlage verbindet.

Bei einer vorteilhaften Weiterbildung des erfindungsgemäßen Verfahrens wird aus der Kennzahl der ermittelten Nebenstellenanlage und der Ziffernfolge der gewählten Rufnummer eine neue Ziffernfolge gebildet. Für das Bilden der neuen Ziffernfolge ist in der zentralen Steuerung ein Programmodul vorgesehen. Mit Hilfe der neuen Ziffernfolge wird die Telefonverbindung zum zweiten Telefonnetz aufgebaut. Vorteil dieser Weiterbildung ist, daß die in den Nebenstellenanlagen bereits vorhandenen Rufnummernverzeichnisse zur Vermittlung der Telefongespräche benutzt werden. Dies ist besonders dann vorteilhaft, wenn die durch die Rufnummernverzeichnisse in den Nebenstellenanlagen jeweils kürzesten Wege zwischen den Nebenstellenanlagen des Privatnetzes festgelegt werden.

In einer bevorzugten Ausführungsform ist die zentrale Steuerung in einer Nebenstellenanlage integriert. Diese Ausführungsform bietet den Vorteil, daß zwischen der zentralen Steuerung und der ermittelten Nebenstelle eine Telefonverbindung aufgebaut wird, mit der die Verbindung von der rufenden Nebenstelle zur zentralen Steuerung fortgesetzt wird. Diese Ausführungsform bietet sich z.B. an, wenn die Nebenstellenanlagen des ersten Telefonnetzes sternförmig mit der zentralen Steuerung verbunden sind.

Die zentrale Steuerung kann jedoch auch so ausgebildet sein, daß sie die neue Ziffernfolge an die rufende Nebenstellenanlage übermittelt. Die rufende Nebenstellenanlage baut mit der neuen Ziffernfolge eine Verbindung zur ermittelten Nebenstellenanlage auf, von der aus der Übergang zum öffentlichen Telefonnetz erfolgt. Diese Ausgestaltung des erfindungsgemäßen Verfahrens entlastet die zentrale Steuerung vom Verbindungsaufbau zur ermittelten Nebenstellenanlage.

Besonders vorteilhaft ist es, wenn bei der zuvor beschriebenen Ausgestaltung des erfindungsgemäßen Verfahrens nach Übermittlung der neuen Ziffernfolge die Verbindung zwischen rufender Nebenstellenanlage und zentraler Steuerung abgebaut wird. Damit wird sichergestellt, daß im ersten Telefonnetz keine überflüssigen Leitungen zwischen den Nebenstellenanlagen belegt werden.

Nachfolgend wird ein Beispiel der Erfindung anhand der Zeichnung näher erläutert. Darin zeigen:
- Figur 1: schematisch den Aufbau eines Telefonnetzes,
- Figur 2: schematisch den Aufbau der Nebenstellenanlagen,
- Figur 3: ein Verzeichnis zur Vermittlung von Amtsgesprächen,
- Figur 4: die Verfahrensschritte für den Verbindungsaufbau bis zur Auswertung einer gewählten Ziffernfolge und
- Figur 5: die Fortsetzung des Verbindungsaufbaus.

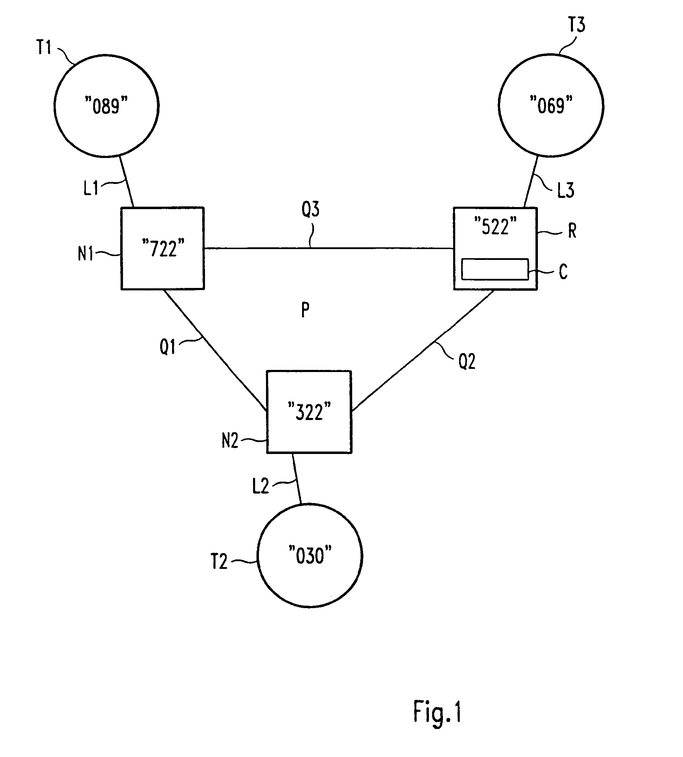

Figur 1 zeigt mehrere Nebenstellenanlagen N1, N2 und R eines Unternehmens, die zu einem Privatnetz P gehören. Zur Nebenstellenanlage R gehört eine zentrale Steuerung C, die Steuerungsaufgaben übernimmt, welche weiter unten noch erläutert werden. Die Nebenstellenanlagen N1, N2, R sind mittels Querverbindungen Q1, Q2 und Q3 miteinander verbunden, die z.B. mit Hilfe von Standleitungen realisiert sind. Die Nebenstellenanlagen N1, N2, R sind über Leitungsbündel L1, L2 und L3 an je ein Ortsnetz T1, T2 und T3 angeschlossen, das von einem Netzbetreiber eines öffentlichen Telefonnetzes betrieben wird. Dem Ortsnetz T1 ist die Ortsnetzkennzahl "089", dem Ortsnetz T2 eine Ortsnetzkennzahl "030" und dem Ortsnetz T3 die Ortsnetzkennzahl "069" zugeordnet.

Den Nebenstellenanlagen N1, N2 und R sind Nebenstellenanlagen-Kennzahlen "722", "322" bzw. "522" zugeordnet, die die Nummernbereiche der an die Nebenstellenanlagen angeschlossenen Endgeräte festlegen.
Nicht dargestellt sind die an die Nebenstellenanlagen N1, N2 und R angeschlossenen Nebenstellen und die zu den Ortsnetzen T1, T2, T3 gehörenden Ortsvermittlungsstellen, Endgeräte und Leitungen zwischen diesen Endgeräten und den Ortsvermittlungsstellen.

Telefonverbindungen von Teilnehmern des Privatnetzes P zu Teilnehmern im öffentlichen Telefonnetz werden in zwei Phasen aufgebaut. In einer ersten Phase baut eine rufende Nebenstellenanlage N1, N2 eine Verbindung zur Nebenstellenanlage R auf und übergibt ihr eine gewählte Ziffernfolge des Teilnehmers im öffentlichen Telefonnetz. Anhand dieser Ziffernfolge ermittelt die zentrale Steuerung C der Nebenstellenanlage R die Nebenstellenanlage N1, N2, R, von der aus der Übergang zum öffentlichen Telefonnetz erfolgt. Dabei wird diejenige Nebenstellenanlage N1, N2, R ausgewählt, die in unmittelbarer Nähe eines Zielortes liegt, d.i. das Ortsnetz T1, T2, T3, an das ein gerufenes Endgerät angeschlossen ist. In einer zweiten Phase des Verbindungsaufbaus wird die Verbindung zu dieser ermittelten Nebenstellenanlage N1, N2, R aufgebaut, von der aus der Übergang zum öffentlichen Telefonnetz erfolgt.

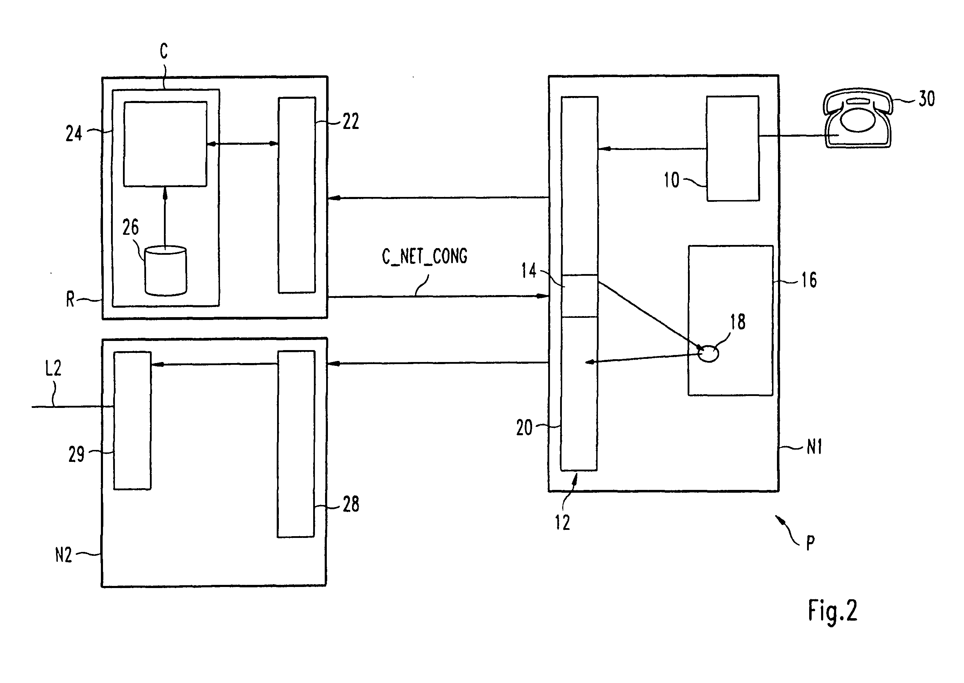

Figur 2 zeigt Elemente 10 bis 29 der Nebenstellenanlagen N1, N2, R, die für eine Verbindung von einem an die Nebenstellenanlage N1 angeschlossenen Endgerät 30 zum Ortsnetz T2 benötigt werden. Die Nebenstellenanlage N1 enthält ein Teilnehmer-Vermittlungsmodul 10, das die vom Endgerät 30 übermittelte Rufnummer auswertet und Verbindungen zu anderen, hier nicht dargestellten Nebenstellen herstellt, die an die Nebenstellenanlage N1 angeschlossen sind, bzw. ein Vermittlungsmodul 12 veranlaßt, Verbindungen zu den anderen Nebenstellenanlagen N2, R herzustellen. Über das Vermittlungsmodul 12 ist die Nebenstellenanlage N1 mit den Querleitungen Q1, Q3 und dem Leitungsbündel L1 verbunden. Ferner enthält die Nebenstellenanlage N1 einen Wählspeicher 16, in dem die von den Teilnehmern der Nebenstellenanlage N1 gewählten Rufnummern zwischengespeichert werden.

Eine Leitwegelenkung 20 ermittelt einen Verbindungsweg durch das Privatnetz P von der Nebenstellenanlage N1 zur Nebenstellenanlage N2, R. Kommt eine Verbindung über einen ersten Verbindungsweg nicht zustande, weil z.B. die Querleitung Q1, Q2, Q3, über die dieser Verbindungsweg führt, belegt ist, legt die Leitwegelenkung 20 einen weiteren Verbindungsweg fest. Mit einer Nachricht "C_NET_CONG" wird der rufenden Nebenstellenanlage N1, N2, R mitgeteilt, daß eine Verbindung zu einer gerufenen Nebenstellenanlage N1, N2, R nicht zustande kommt. Die Leitwegelenkung 20 wird nach Empfang der Nachricht "C_NET_CONG" vom Vermittlungsmodul 12 aufgerufen.

Nachdem ein Teilnehmer am Endgerät 30 eine Amtskennziffer gewählt hat, veranlaßt das Teilnehmer-Vermittlungsmodul 10 das Vermittlungsmodul 12 über die Querverbindung Q3 eine Telefonverbindung zur Nebenstellenanlage R aufzubauen. Zur Nebenstellenanlage R gehört ein Vermittlungsmodul 22, über das Nebenstellenanlage R mit den Querleitungen Q2 und Q3 und dem Leitungsbündel L3 verbunden ist. Ferner gehört zur Nebenstellenanlage R die zentrale Steuerung C. Diese enthält ein Least-Cost-Routing-Programmodul 24, kurz LCR-Modul 24, für die Auswertung und Bearbeitung einer Rufnummer, die einem Teilnehmer im öffentlichen Telefonnetz zugewiesen ist, und ein Verzeichnis 26 mit Informationen für den Übergang zum öffentlichen Telefonnetz.

Die Verbindung zur Nebenstellenanlage R wird unmittelbar nach der Wahl der Amtskennziffer aufgebaut. Jede weitere Ziffer wird direkt, d.h. unmittelbar nachdem sie gewählt worden ist, zur Nebenstellenanlage R übermittelt.

Nachdem die letzte Ziffer gewählt und zur Nebenstellenanlage R übertragen worden ist, wertet das LCR-Modul 24 die gewählte Ziffernfolge aus. Mit Hilfe des Verzeichnisses 26 ermittelt das LCR-Modul 24 die Nebenstellenanlagen-Kennzahl derjenigen Nebenstellenanlage N1, N2, R, von der aus der Übergang zum öffentlichen Telefonnetz erfolgt. Das LCR-Modul 24 ersetzt in der gewählten Ziffernfolge die Amtskennziffer durch die ermittelte Nebenstellenanlagen-Kennzahl.

Ein Beispiel soll dies verdeutlichen: Aus einer gewählten Ziffernfolge "0 030 123456", die einem Endgerät mit der Rufnummer "123456" im Ortsnetz T2 mit der Ortsnetzkennzahl "030" zugeordnet ist, bildet das LCR-Modul 24 die bearbeitete Ziffernfolge "322 030 123456". Dabei verweist die Nebenstellenanlagen-Kennzahl "322" auf die Nebenstellenanlage N2, die über das Leitungsbündel L2 mit dem Ortsnetz T2 verbunden ist.

Nach der Bearbeitung der Ziffernfolge legt das LCR-Modul 24 fest, über welchen Verbindungsweg die Verbindung zur ermittelten Nebenstellenanlage N2 hergestellt wird. Ein erster Weg führt über die Querleitung Q1 von der Nebenstellenanlage N1 zur Nebenstellenanlage N2. Ein zweiter Weg führt über die Querleitung Q3 zum Nebenstellenanlage R und von dort über die Querleitung Q2 zur Nebenstellenanlage N2. In diesem Beispiel wird der erste Weg gewählt, um die Querleitungen Q3 und Q2 zur Nebenstellenanlage R zu entlasten.

Die Nebenstellenanlage R übermittelt die Nachricht "C_NET_CONG" und die bearbeitete Ziffernfolge, z.B. "322 030 123456", zur rufenden Nebenstellenanlage N1. Nach Empfang der Nachricht "C_NET_CONG" und der bearbeiteten Ziffernfolge trägt eine Programmfunktion 14 des Vermittlungsmoduls 12 die bearbeitete Ziffernfolge in einen Speicherbereich 18 des Wählspeichers 16 ein. Das Vermittlungsmodul 12 baut die Verbindung zur Nebenstellenanlage R ab. Anschließend liest die Leitwegelenkung 20 die im Speicherbereich 18 abgelegte Ziffernfolge und baut eine Verbindung zur ermittelten Nebenstellenanlage auf.

Bei dem oben angegebenen Beispiel der Rufnummer "030 123456" wird entsprechend der bearbeiteten Ziffernfolge "322 030 123456" über die Querleitung Q1 eine Verbindung zu einem Vermittlungsmodul 28 der Nebenstellenanlage N2 aufgebaut. Die Ziffernfolge "322 030 123456" wird zur Nebenstellenanlage N2 übertragen. Nach Empfang dieser Ziffernfolge entfernt das Vermittlungsmodul 28 die Ziffern der Nebenstellenanlagen-Kennzahl "322" aus der Ziffernfolge "322 030 123456". Das Vermittlungsmodul 28 stellt anhand der Ortsnetzkennzahl "030" fest, daß die übergebene Ziffernfolge "030 123456" zu einem Endgerät im Ortsnetz T2 gehört. Die Ziffernfolge "030 123456" wird an ein Amtsvermittlungsmodul 29 übergeben, das über die Leitung L2 eine Verbindung zum Ortsnetz T2 aufbaut.

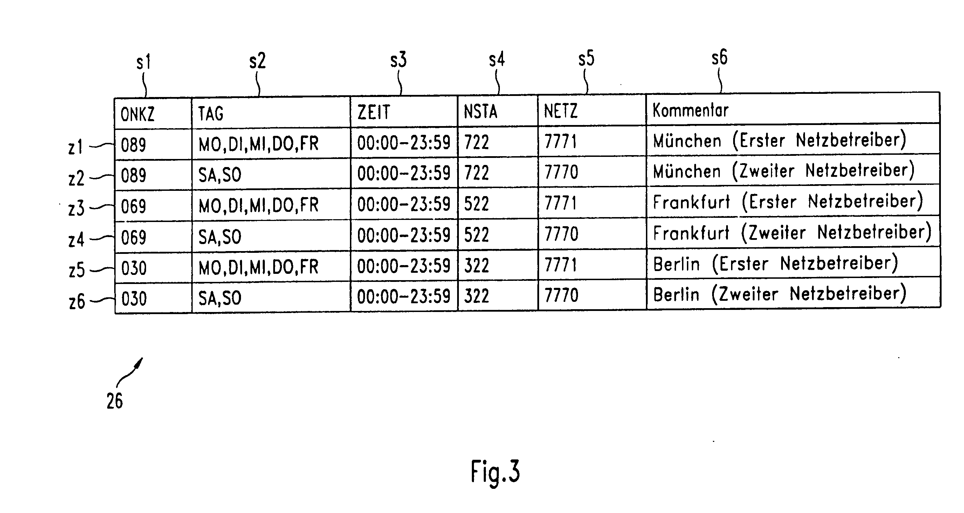

Figur 3 zeigt ein Beispiel für das Verzeichnis 26. Das Verzeichnis 26 ist als Liste von Datenzeilen z1 bis z6 aufgebaut und enthält Spalten s1 bis s6 für nachfolgend erläuterte Kenngrößen ONKZ, TAG, ZEIT, NSTA, NETZ und einen Kommentar.

Mit Hilfe des Verzeichnisses 26 ermittelt das LCR-Modul 24 der zentralen Steuerung C für eine Rufnummer eines gerufenen Endgerätes im öffentlichen Telefonnetz die Nebenstellenanlagen-Kennzahl NSTA und eine Netz-Kennzahl NETZ. Die Netz-Kennzahl NETZ definiert einen Netzbetreiber, in diesem Beispiel das öffentliche Telefonnetz, über das die Telefonverbindung vom Privatnetz P zum Ortsnetz T1, T2, T3 hergestellt wird.

Der Wert der Kenngröße ONKZ in der ersten Spalte s1 definiert die Ortsnetzkennzahl der Rufnummer des gerufenen Teilnehmers, z.B. "089" für das Ortsnetz T1 mit dem die Nebenstellenanlage N1 über das Leitungsbündel L1 verbunden ist. Die Kenngröße TAG in der zweiten Spalte verweist auf eine Zeichenfolge, die eine Liste mit Wochentagen festlegt. Die Kenngröße ZEIT in der Spalte s3 verweist auf eine Zeichenfolge, die eine Tageszeit definiert.

Die vierte Spalte s4 enthält für jede Datenzeile z1 bis z6 die Nebenstellenanlagen-Kennzahl NSTA, die eine Nebenstellenanlage N1, N2, R definiert, über die der Übergang zum öffentlichen Telefonnetz erfolgt. Die fünfte Spalte s5 enthält für jede Datenzeile z1 bis z6 die Netz-Kennzahl NETZ, die den Netzbetreiber definiert, dessen Telefonnetz benutzt wird. Die sechste Spalte schließlich enthält für jede Datenzeile z1 bis z6 einen erläuternden Text. In der Datenzeile z1 weist der Text "München (Erster Netzbetreiber)" darauf hin, daß die Datenzeile z1 Verbindungswege zum Ortsnetz München, d.h. zum Ortsnetz T1, über das Telefonnetz eines ersten Netzbetreibers festlegt.

Die Datenzeile z1 legt für Verbindungen zum Ortsnetz T1 mit der Ortsnetzkennzahl ONKZ = 089, die von Montag bis Freitag aufgebaut werden, d.h. TAG = MO,DI,MI,DO,FR, für den Amtsausstieg die Nebenstellenanlage N1 mit der Nebenstellenanlagen-Kennzahl NSTA = 722 fest. Für die Netz-Kennzahl NETZ definiert die Datenzeile z1 den Wert "7771" des ersten Netzbetreibers. Die Datenzeile z2 legt für Telefongespräche zu Teilnehmern im Ortsnetz T1, die an einem Samstag oder Sonntag geführt werden, für die Nebenstellenanlagen-Kennzahl NSTA den Wert "722" und für die Netz-Kennzahl NETZ den Wert "7770" eines zweiten Netzbetreibers fest.

Die Datenzeilen z3 und z4 definieren Werte für Nebenstellenanlagen-Kennzahl NSTA und die Netz-Kennzahl NETZ für Verbindungen zu Teilnehmern im Ortsnetz T3. Die Datenzeilen z5 und z6 legen Werte für die Kenngrößen NSTA und NETZ für Telefongespräche ins Ortsnetz T2 mit der Ortsnetzkennzahl "030" fest.

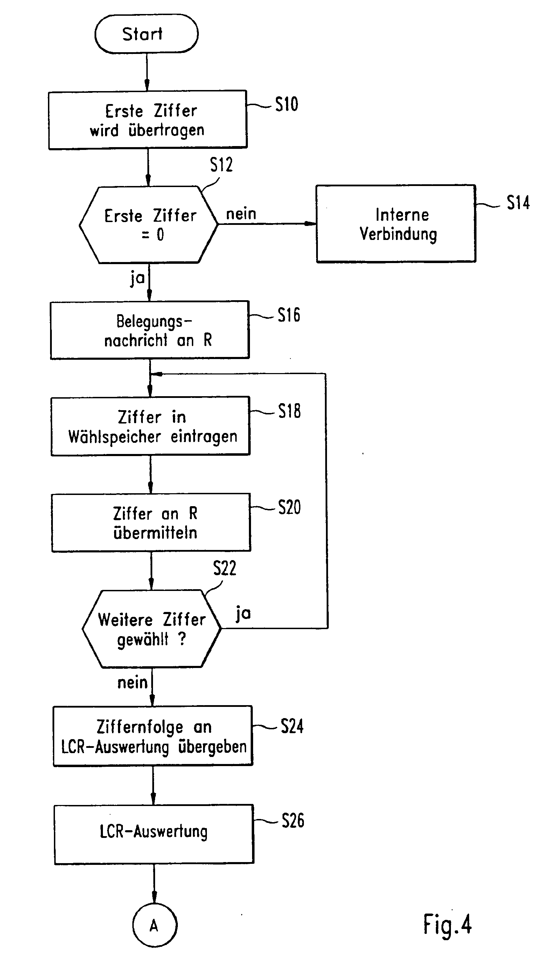

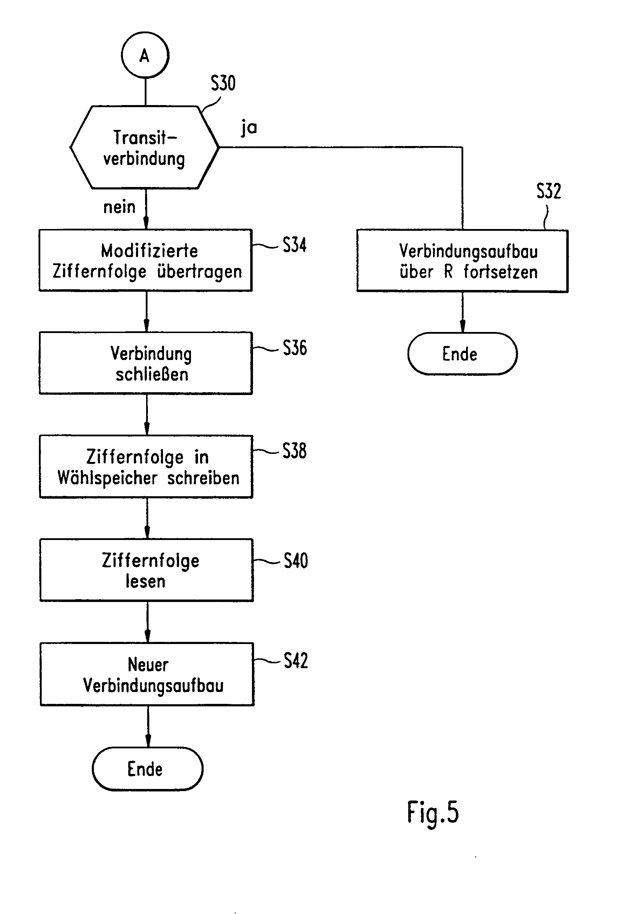

Anhand der Figuren 4 und 5 wird der Ablauf des Verfahrens mit Hilfe eines Flußdiagramms näher erläutert. Figur 4 zeigt die Verfahrensschritte S10 bis S26 bis zur Auswertung der gewählten Ziffernfolge durch das LCR-Modul 24 in der Nebenstellenanlage R. Im Verfahrensschritt S10 wird die von einem Teilnehmer des Privatnetzes P am Endgerät 30 gewählte Ziffer zum Teilnehmer-Vermittlungsmodul 10 übertragen. Das Teilnehmer-Vermittlungsmodul 10 prüft in der Abfrage S12, ob es sich bei der gewählten Ziffer um die Amtskennziffer handelt. In diesem Beispiel ist "0" Amtskennziffer. Im Nein-Zweig wird im Schritt S14 eine Verbindung zu einem weiteren Endgerät des Privatnetzes P aufgebaut. Im Ja-Zweig veranlaßt das Teilnehmer-Vermittlungsmodul 10 das Vermittlungsmodul 12 eine Verbindung zur Nebenstellenanlage R aufzubauen.

Im Ablaufschritt S16 baut das Vermittlungsmodul 12 über die Querleitung Q3 eine Verbindung zur Nebenstellenanlage R auf. Die gewählte Ziffer wird im Schritt S18 zunächst in den Wählspeicher 16 eingetragen und im Schritt S20 an die Nebenstellenanlage R übertragen. Anschließend prüft das Teilnehmer-Vermittlungsmodul 10, ob eine weitere Ziffer gewählt worden ist (Abfrage S22). Ist dies der Fall, wird zum Schritt S18 zurückgesprungen. Im Nein-Zweig der Abfrage S22 übergibt das Vermittlungsmodul 22 der Nebenstellenanlage R die gewählte Ziffernfolge an das LCR-Modul 24 (Schritt S24).

Im Verfahrensschritt S26 erfolgt die Bearbeitung der gewählten Ziffernfolge. Zunächst wird die Ortsnetzkennzahl des gerufenen Endgerätes bestimmt und unter Berücksichtigung des Wochentages und der Tageszeit die entsprechende Datenzeile z1 bis z6 des Verzeichnisses 26 ausgewählt. Angenommen, die Ziffernfolge "0030123456" ist an einem Mittwoch um 10:00 Uhr gewählt worden, so wählt das LCR-Modul 24 aus dem Verzeichnis 26 die Datenzeile z5 aus. Damit ergibt sich für die Nebenstellenanlagen-Kennzahl NSTA der Wert "322" und für die Netz-Kennzahl der Wert "7771". Die modifizierte Ziffernfolge "322 7771 030 123456" wird an das Vermittlungsmodul 22 übermittelt.

Figur 5 zeigt die Verfahrensschritte S30 bis S42, mit denen der Verbindungsaufbau fortgesetzt wird. Das Vermittlungsmodul 22 der Nebenstellenanlage R entscheidet in der Abfrage S30, ob von der Nebenstellenanlage R aus eine Telefonverbindung zur Nebenstellenanlage N1, N2 hergestellt wird, von der aus der Übergang zum öffentlichen Telefonnetz erfolgt. Im Ja-Zweig der Abfrage S30 baut das Vermittlungsmodul 22 der Nebenstellenanlage R eine Verbindung zu derjenigen Nebenstellenanlage N1, N2, R auf, deren Nebenstellenanlagen-Kennzahl vom LCR-Modul 24 ermittelt worden ist (Schritt S32).

Im Nein-Zweig der Abfrage S30 übermittelt die Nebenstellenanlage R die modifizierte Ziffernfolge, z.B. "322 7771 030 123456", zu einer rufenden Nebenstellenanlage N1, N2, von der aus die Telefonverbindung zur Nebenstellenanlage R aufgebaut worden ist (Schritt S34). Das Vermittlungsmodul 22 der Nebenstellenanlage R schickt die Meldung "C_NET_CONG" zur rufenden Nebenstellenanlage N1, N2. Nachdem das Vermittlungsmodul 12 der rufenden Nebenstellenanlage N1, N2 die Meldung "C_NET_CONG" empfangen hat, schließt es im Verfahrensschritt S36 die Telefonverbindung zur Nebenstellenanlage R.

Die Programmfunktion 14 schreibt die modifizierte Ziffernfolge in den Speicherbereich 18 des Speichers 16 (Schritt S38). Ferner wird aufgrund der Meldung "C_NET_CONG" anschließend von der Leitwegelenkung 20 der rufenden Nebenstellenanlage N1,N2 im Schritt S40 die modifizierte Ziffernfolge aus dem Speicherbereich 18 des Wählspeichers 16 gelesen. Anschließend baut die Leitwegelenkung 20 über die Nebenstellenanlage N1, N2, R mit der ermittelten Nebenstellenanlagen-Kennzahl eine Verbindung ins öffentliche Telefonnetz auf.

## Patentansprüche

1. Verfahren zum Vermitteln von Gesprächen von einem ersten Endgerät (30) in einem ersten Telefonnetz (P) zu einem zweiten Endgerät in einem zweiten Telefonnetz, bei dem das erste Telefonnetz (P) eine Vielzahl von Nebenstellenanlagen (N1, N2, R) enthält, wovon mehrere der Nebenstellenanlagen (N1, N2, R) Zugang zum zweiten Telefonnetz haben,
**dadurch gekennzeichnet,**
**dass** in einer der Nebenstellenanlagen (R)
- ein LCR-Modul (24) und
- ein Verzeichnis (26), das für sämtliche Nebenstellenanlagen (N1, N2, R) abhängig von einer gerufenen Ortsnetzkennzahl diejenige Nebenstellenanlage (N1, N2, R) identifiziert, bei der ein Übergang in das zweite Telefonnetz erfolgt, implementiert ist, und
**dass** ein Aufbau einer Telefonverbindung zu dem Endgerät im zweiten Telefonnetz folgende Schritte umfaßt:
- Aufbau einer Telefonverbindung von einer rufenden Nebenstellenanlage (N1, N2, R) zur Nebenstellenanlage (R), die das LCR-Modul (24) enthält,
- Übertragen der Ziffernfolge einer gewählten Rufnummer, die dem Endgerät im zweiten Telefonnetz zugeordnet ist, zum LCR-Modul (24),
- Ermitteln derjenigen Nebenstellenanlage (N1, N2, R), bei der der Übergang zum zweiten Telefonnetz erfolgt, unter Verwendung des Verzeichnisses (26),
- Aufbau der Telefonverbindung vom Endgerät zum zweiten Telefonnetz über die ermittelte Nebenstellenanlage (N1, N2, R).

2. Verfahren nach Anspruch 1,
**dadurch gekennzeichnet,**
**daß** das erste Telefonnetz ein Privatnetz (P) und das zweite Telefonnetz ein öffentliches Telefonnetz (T1, T2, T3) ist.

3. Verfahren nach Anspruch 1 oder 2,
**dadurch gekennzeichnet,**
**daß** das LCR-Modul (24) in einem Rechner integriert ist.

4. Verfahren nach einem der vorhergehenden Ansprüche,
**dadurch gekennzeichnet,**
**daß** jeder Nebenstellenanlage (N1, N2) eine Kennzahl zugeordnet ist, daß das LCR-Modul (24) aus der Ziffernfolge der gewählten Rufnummer und der Kennzahl der bezeichneten Nebenstellenanlage (N1, N2) eine neue Ziffernfolge bildet, und daß unter Verwendung dieser Ziffernfolge der Verbindungsaufbau zum zweiten Endgerät erfolgt.

5. Verfahren nach Anspruch 4,
**dadurch gekennzeichnet,**
**daß** das LCR-Modul (24) die neue Ziffernfolge an die rufende Nebenstellenanlage (N1, N2) übermittelt.

6. Verfahren nach Anspruch 5,
**dadurch gekennzeichnet,**
**daß** nach Übermitteln der neuen Ziffernfolge die Telefonverbindung zwischen rufender Nebenstellenanlage (N1, N2) und LCR-Modul (24) abgebaut wird.

7. Verfahren nach einem der vorhergehenden Ansprüche,
**dadurch gekennzeichnet,**
**daß** das Verzeichnis (26) aus Datenzeilen (z1 bis z6) besteht und jede Datenzeile (z1 bis z6) mindestens eine Kenngröße ONKZ, die eine Ortsnetzkennzahl eines Gespräches festlegt, und eine Kenngröße NSTA enthält, die die Kennzahl einer Nebenstellenanlage (N1, N2) des ersten Telefonnetzes (P) festlegt.

## Claims

1. Method for switching calls from a first terminal (30) in a first telephone network (P) to a second terminal in a second telephone network,
in which the first telephone network (P) contains a multiplicity of private branch exchange systems (N1, N2, R), a number of which private branch exchange systems (N1, N2, R) have access to the second telephone network,
**characterized in that**
one of the private branch exchange systems (R) contains
- an LCR module (24) and
- a directory (26) which, for all the private exchange systems (N1, N2, R) and depending on called local area code, identifies that private branch exchange system (N1, N2, R) in which a transfer to the second telephone network will be carried out, and
**in that** the setting up of a telephone connection to the terminal in the second telephone network comprises the following steps:
setting up a telephone connection from a calling private branch exchange system (N1, N2, R) to the private branch exchange system (R) which contains the LCR module (24),
- transmitting the character sequence of a dialed telephone number which is associated with the terminal in the second telephone network, to the LCR module (24),
- determining that private branch exchange system (N1, N2, R) in which the transfer to the second telephone network will take place, using the directory (26),
- setting up the telephone connection from the terminal to the second telephone network via the private branch exchange system (N1, N2, R) which has been determined.

2. Method according to claim 1,
**characterized**
**in that** the first telephone network is a private network (P), and the second telephone network is a public telephone network (T1, T2, T3).

3. Method according to claim 1 or 2,
**characterized**
**in that** the LCR module (24) is integrated in a computer.

4. Method according to one of the preceding claims,
**characterized**
**in that** each private branch exchange system (N1, N2) has an associated code number, in that the LCR module (24) uses the character sequence of the dialed telephone number and the code number of the identified private branch exchange system (N1, N2) to form a new character sequence, and in that the connection is set up to the second terminal using this character sequence.

5. Method according to claim 4,
**characterized**
**in that** the LCR module (24) transmits the new character sequence to the calling private branch exchange system (N1, N2).

6. Method according to claim 5,
**characterized**
**in that**, after transmitting the new character sequence, the telephone connection between the calling private branch exchange system (N1, N2) and the LCR module (24) is cleared.

7. Method according to one of the preceding claims,
**characterized**
**in that**
the directory (26) comprises data lines (z1 to z6), and each data line (z1 to z6) contains at least one code variable ONKZ, which defines a local area code of a call, and a code variable NSTA, which defines the code number of a private branch exchange system (N1, N2) in the first telephone network (P).

## Revendications

1. Procédé de commutation de conversations d'un premier terminal (30) dans un second réseau téléphonique (P) vers un second terminal dans un second réseau téléphonique, dans lequel le premier réseau téléphonique (P) contient une pluralité de commutateurs privés (N1, N2, R) dont plusieurs de ces commutateurs privés (N1, N2, R) ont accès au second réseau téléphonique,
**caractérisé en ce que**
sont implémentés dans l'un des commutateurs privés (R)
- un module LCR (24) et
- un répertoire (26) qui identifie, pour tous les commutateurs privés (N1, N2, R) en fonction d'un indicatif de réseau appelé, le commutateur privé (N1, N2, R) avec lequel s'effectue un passage dans le second réseau téléphonique, et
**en ce qu'**un établissement d'une liaison téléphonique au terminal dans le second réseau téléphonique comporte les étapes suivantes :
- établissement d'une liaison téléphonique d'un commutateur privé appelant (N1, N2, R) au commutateur privé (R) qui contient le module LCR (24),
- transmission au module LCR (24) de la séquence de chiffres d'un numéro d'appel composé qui est attribué au terminal dans le second réseau téléphonique,
- détermination du commutateur privé (N1, N2, R) auprès duquel s'effectue le passage au second réseau téléphonique, en utilisant le répertoire (26),
- établissement de la liaison téléphonique du terminal au second réseau téléphonique via le commutateur privé déterminé (N1, N2, R).

2. Procédé selon la revendication 1,
**caractérisé en ce que**
le premier réseau téléphonique est un réseau privé (P) et le second réseau téléphonique un réseau téléphonique public (T1, T2, T3).

3. Procédé selon la revendication 1 ou 2,
**caractérisé en ce que**
le module LCR (24) est intégré dans un ordinateur.

4. Procédé selon l'une des revendications précédentes,
**caractérisé en ce que**
à chaque commutateur privé (N1, N2) un code est attribué, **en ce que** le module LCR (24) forme une nouvelle séquence de chiffres à partir de la séquence de chiffres du numéro d'appel composé et du code du commutateur privé (N1, N2) indiqué et **en ce que** l'établissement de la liaison au second terminal est effectué à l'aide de l'utilisation de cette séquence de chiffres.

5. Procédé selon la revendication 4,
**caractérisé en ce que**
le module LCR (24) transmet la nouvelle séquence de chiffres au commutateur privé appelant (N1, N2).

6. Procédé selon la revendication 5,
**caractérisé en ce que**
après la transmission de la nouvelle séquence de chiffres, la liaison téléphonique entre le commutateur privé appelant (N1, N2) et le module LCR (24) est défaite.

7. Procédé selon l'une des revendications précédentes,
**caractérisé en ce que**
le répertoire (26) est constitué de lignes de données (z1 à z6) et **en ce que** chaque ligne de données (z1 à z6) contient au moins une grandeur caractéristique ONKZ, qui définit un indicatif de réseau local d'une conversation, et une grandeur caractéristique NSTA, qui définit le code d'un commutateur (N1, N2) du premier réseau téléphonique (P).
